# EUROPÄISCHE PATENTANMELDUNG

(11) **EP 0 854 559 A1**
(43) Veröffentlichungstag der Anmeldung: **22.07.1998**
(21) Anmeldenummer: 97810918.9
(22) Anmeldetag: 27.11.1997
(51) Int. Cl.: H02K 1/32, F04D 29/38

(54) **Rotor eines Turbogenerators mit direkter Gaskühlung**

(30) Priorität: 21.12.1996 DE 19653839
(71) Anmelder: Asea Brown Boveri AG, 5401 Baden (CH)
(72) Erfinder: Hess, Stephan, 79713 Bad Säckingen (DE); Hirsch, Christoph, Dr., 5210 Windisch (CH); Jung, Michael, Dr., 79804 Dogern (DE); Schubert, Johann, 5506 Mägenwil (CH)
(74) Vertreter: Weibel, Beat

(57) **Zusammenfassung**

Bei einer luftgekühlten elektrischen Maschine mit Revers-Kühlung im geschlossenen Kühlkreislauf ist zwischen einer Rotorkappenplatte (22) und einer Rotorwelle (28) ein zweistufiges Schaufelgitter zur optimalen Anströmung des Rotors (4) und der Rotorwicklung (29) mit Kühlluft vorgesehen. Die in Strömungsrichtung erste Schaufelgitterstufe (30b) ist ein Verzögerungsgitter mit druckerzeugenden Eigenschaften, die in Strömungsrichtung folgende Schaufelgitterstufe (30a) ist ein Verzögerungsgitter mit umlenkenden Eigenschaften.

## Beschreibung

### TECHNISCHES GEBIET

Die Erfindung betrifft einen Rotor eines Turbogenerators mit direkter Gaskühlung, wie er im Oberbegriff des ersten Anspruchs beschrieben ist.

Ein Rotor eines Turbogenerators mit direkter Gaskühlung ist beispielsweise aus der DD 120 981 bekannt.

### TECHNOLOGISCHER HINTERGRUND UND STAND DER TECHNIK

Bei Generatoren, die nach dem Druckkühlungsprinzip betrieben werden, ermöglicht ein Hauptventilator eine drallbehaftete Einströmung der Kühlluft in den Wickelkopfraum der Polzone des Rotors. Das heisst, dass der Restdrall der Luft am Austritt des Hauptventilators dafür sorgt, dass die Luft nahezu ohne Schlupf vor der Polzone des Rotors rotiert. Das Einströmen von Kühlluft in die dafür vorgesehenen vorwiegend axialen Kühlkanäle des Rotors und der Rotorwicklung ist somit beim Druckkühlprinzip unproblematisch.

Um zusätzlich den Kühlmitteldurchsatz im Rotor zu erhöhen, wird in der DD 120 981 vorgeschlagen, bei im Druckkühlungsprinzip gekühlten Generatoren, die Kühlung des Rotors und dessen Wicklung mittels zusätzlichem Laufschaufelgitter unter der Rotorkappe zu forcieren. Dieses Laufschaufelgitter vermag die trotz Restdrall der Kühlluft verbleibenden, sogenannten Stossverluste beim Eintritt der Kühluft in die im wesentlichen axial verlaufenden Rotorkühlkanäle weiter zu reduzieren, so dass die Kühlung des Rotors optimiert und die Gesamtverluste reduziert werden.

Im Gegensatz hierzu leiten die Hauptventilatoren von im Saugkühlprinzip arbeitenden Generatoren die Kühlluft zunächst zu einem Kühler, wobei der Restdrall der Kühlluftströmung verwirbelt wird. Generell bietet die Saugkühlung gegenüber der Druckkühlung den Vorteil, dass die die Kühler verlassende Luft unmittelbar den Kühlkanälen im gesamten Generator zugeführt werden kann und die durch den Maschinenventilator verursachte Temperaturerhöhung eliminiert ist. Allerdings wird auf diese Weise dem Rotor Kühlluft ohne den erforderlichen Drall zugeführt. Der Rotor muss die Kühlluft zunächst auf Umfangsgeschwindigkeit beschleunigen, bevor sie in die Kühlkanäle eintreten kann. Der Rotor muss somit die gesamte Arbeit leisten, um die bereits erwähnten Stossverluste zu überwinden. Hierbei kann es zur Ablösung der Kühlgasströmung kommen, und es können die Rotorteilleitereintritte fehlangeströmt werden. Die Folge ist dann eine stark eingeschränkte Kühlluftverteilung mit entsprechender Gefährdung der gesamten Rotorwicklung.

Die Verwendung eines Laufschaufelgitters gemäss DD 120 981 vermag zwar dieses vor allem bei Saugkühlung auftretende Problem bei der Rotorkühlung zu reduzieren, sie ist aber ausserstande, den heutigen Anforderungen bei der Kühlung von Rotoren in Grenzleistungsmaschinen gerecht zu werden. Hierbei ist nämlich eine Umlenkung der Kühlgasströmung bis zu 80° bei axialer Umlenkung nötig, was bei einer nach dem Stand der Technik vorgeschlagenen Schaufelreihe zum Ablösen der Strömungsgrenzschicht an der Schaufelwand führt.

### DARSTELLUNG DER ERFINDUNG

Aufgabe der Erfindung ist es, einen Rotor eines Turbogenerators mit direkter Gaskühlung der eingangs genannten Gattung zu schaffen, der vorzugsweise unter Saugkühlung betrieben wird und optimal gekühlt werden kann.

Erfindungsgemäss wird diese Aufgabe durch die Merkmale des ersten Anspruchs gelöst.

Die Vorteile der Erfindung sind unter anderem darin zu sehen, dass durch ein zweistufiges Strömungsgitter zum einen in einer ersten Stufe eine gewünschte Druckerhöhung des Kühlmittelstromes erzwungen wird, und zum anderen in einer zweiten Stufe die erforderliche Umlenkung des Kühlmittelstromes durchgeführt wird. Erst eine derartige funktionale Trennung zwischen Druckerhöhung und Umlenkung der Kühlmittelströmung gewährleistet eine optimale, mit geringsten Stossverlusten versehenen Anströmung der im Rotorkörper und in der Rotorwicklung vorhandenen Kühlkanäle bei Anwendung des Saugkühlprinzips.

Bei einer besonders bevorzugten Ausführungsform der Erfindung ist vorgesehen, dass die erste Stufe des Strömungsgitters mit druckerzeugenden Eigenschaften dem Hauptventilator der elektrischen Maschine zugewandt ist, und die zweite Stufe des Strömungsgitters mit Umlenkeigenschaften dem Rotorwickelkopf zugewandt ist. Hierbei sind die Strömungsgitter in axialer Richtung voneinander separiert, dass heisst, dass sie einander in axialer Richtung nicht überlappen.

Eine besonders vorteilhafte Wirkung der verbesserten Kühlmittelströmungsführung und damit der Kühlung des Rotors stellt sich ein, wenn die die Kühlmittelströmung begrenzenden Wände zwischen dem Innenrand der Rotorkappenplatte und der Rotorwelle eine zum Rotorwickelkopf hin konisch zusammenlaufende Kontur-aufweisen.

### KURZE BESCHREIBUNG DER ZEICHNUNG

Die Erfindung wird nachstehend anhand eines Ausführungsbeispiels näher erläutert. In der Zeichnung zeigt
- Fig. 1: einen vereinfachten Längsschnitt durch einen luftgekühlten Turbogenerators mit geschlossenem Kühlkreislauf nach dem Saugkühlprinzip;
- Fig. 2: eine etwas detailliertere, vergrösserte Längsschnittdarstellung der Einzelheit X nach Fig. 1;
- Fig. 3: die Einzelheit X nach Fig. 1 in einer weiteren Längsschnittdarstellung;
- Fig. 4: eine teilweise Abwicklung einer Rotorkappenplatte mit Strömungsgitter.

Es sind nur die für das Verständnis der Erfindung wesentlichen Elemente gezeigt.

### WEG ZUR AUSFÜHRUNG DER ERFINDUNG

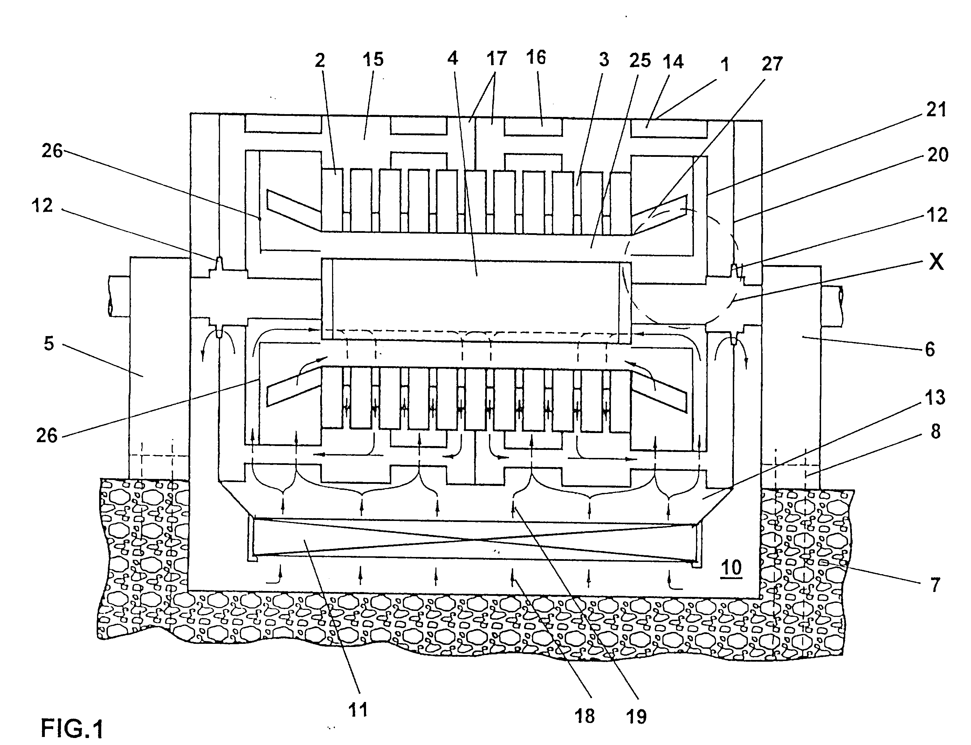

Der in Fig. 1 dargestellte luftgekühlte Turbogenerator weist ein Maschinengehäuse 1 auf, das einen aus Teilblechkörpern 2 bestehenden Statorblechkörper einschliesst. Im Statorblechkörper sind radiale Belüftungsschlitze 3 zwischen den einzelnen Teilblechkörpern 2 vorgesehen. Ein Rotor 4 ist in Bocklagern 5, 6 gelagert, die auf dem Fundament 7 mittels Zugankern 8 befestigt sind.

Das Fundament 7 weist eine Fundamentgrube 10 auf, die sich axial über die gesamte Länge des Maschinengehäuses 1 erstreckt und nahezu die gesamte Breite des Gehäuses 1 einnimmt. In dieser Fundamentgrube 10 ist eine Kühlanordnung 11 der Maschine angeordnet. Dabei stehen die Eintrittsöffnungen der Kühlanordnung 11 mit Ausströmräumen von beiderseits des Rotors 4 angeordneten Hauptventilatoren 12 in Verbindung und die Austrittsöffnungen der Kühlanordnung 11 münden in einen Ausgleichsraum 13. Das die Kühlanordnung 11 durchströmende Kühlgas ist mittels Pfeilen dargestellt, wobei einströmendes Heissgas mit 18 und ausströmendes Kaltgas mit 19 bezeichnet ist. Alle weiteren nicht näher bezeichneten Pfeile zeigen den Kühlkreislauf des Kühlgases auf. Der Kühlkreislauf ist lediglich in einer Maschinenhälfte durch Pfeile kenntlich gemacht, da hinsichtlich der Kühlung die Maschine symmetrisch aufgebaut ist.

Bei dem Kühlprinzip handelt es sich um eine sogenannte Revers- oder Saugkühlung, bei der Heissgas 18 mittels Ventilatoren 12 der Kühlanordnung 11 zugeführt wird. Der Kühlgasstrom verteilt sich im Ausgleichsraum 13 auf die Kaltgaskammern 14 und 16, wobei sich Teilströmungen ausbilden. Ein erster Teilstrom strömt zwischen Leitblechen 26 und einer Innenverschalung 21 direkt zum Rotor 4, ein zweiter strömt durch den Wickelkopf 27 in den Maschinenluftspalt 25, und ein dritter Kühlgasstrom gelangt durch die Kaltgaskammern 16 und Belüftungsschlitze 3 in den Luftspalt 25. Aus letzterem wird der Kühlgasstrom von den Ventilatoren 12 durch Belüftungsschlitze 3 und die Heissgaskammern 15 und 17 zwischen die Innenverschalung 21 und eine Aussenverschalung 20 gesaugt und anschliessend durch die Fundamentgrube 10 zu den Kühlern 11 geführt.

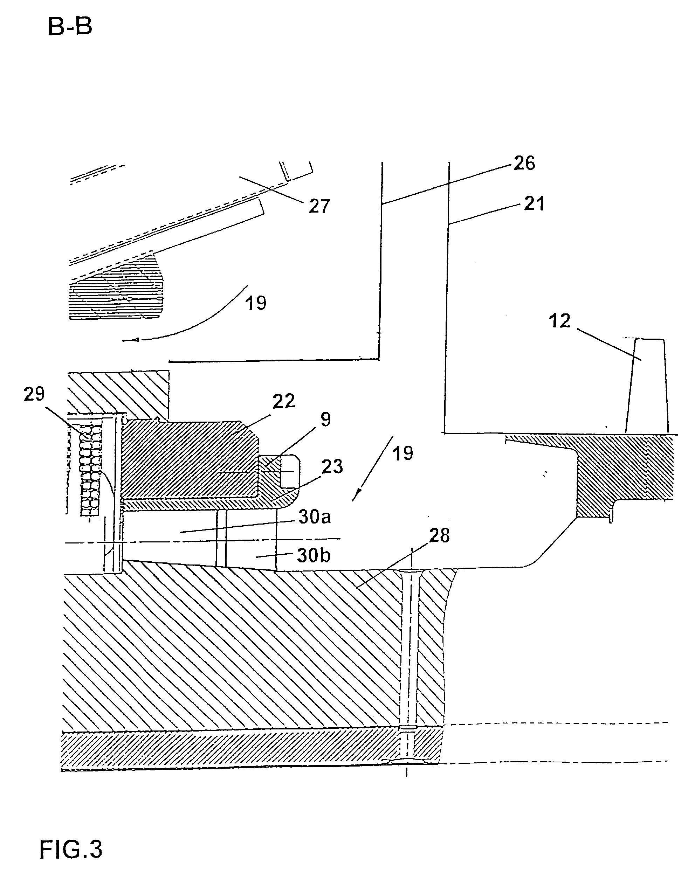

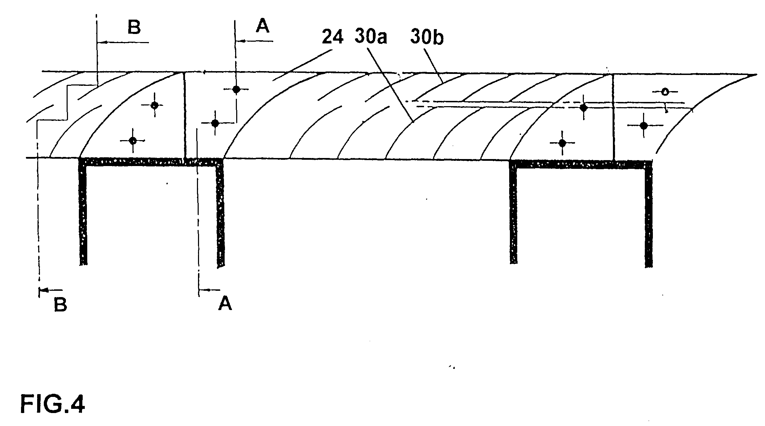

Fig. 3 zeigt in einer vergrösserten und damit detaillierteren Schnittdarstellung den Bereich der Kühlgaszuführung zum Rotor 4. Die Kühlluft 19 strömt zwischen dem Leitblech 26 und der Innenverschalung 21 zu einem Kühllufteinströmkanal, der zwischen einer Rotorwelle 28 und einem ringförmigen Träger 23 gebildet wird. Dieser Strömungskanal weist in Strömungsrichtung zu einer Rotorwicklung 29 hin ein zweistufiges Strömungsgitter 30a, 30b, wobei jede Strömungsgitterstufe jeweils eine Anzahl von am Innenumfang des ringförmigen Trägers 23 angeordneten Laufschaufeln aufweist. Dabei sind die Strömungsgitterstufen 30a, 30b in axialer Richtung des Rotors 4 derart voneinander beabstandet, dass sie sich nicht überlappen (vgl. Fig.4).

Die dem Ventilator 12 zugewandte Strömungsgitterstufe 30b ist als eine Verzögerungsstufe mit im wesentlichen druckerzeugenden Eigenschaften ausgeführt, und die in Strömungsrichtung folgende, der Rotorwicklung 29 zugewandten Strömungsgitterstufe 30a ist als Verzögerungsstufe mit im wesentlichen umlenkenden Eigenschaften ausgeführt. Zur weiteren Optimierung der Kühlmitteleinströmung in den Rotor 4 ist der Strömungskanal zur Rotorwicklung 29 hin konisch zulaufend ausgeformt, wobei die Rotorwelle 4 zu diesem Zweck entsprechend verdickt ist. Hierbei sei angemerkt, dass diese Konturierung eine beispielhafte Ausführung darstellt. So ist erfindungsgemäss ebenfalls denkbar, eine zusätzliche oder ausschliessliche Konturierung des ringförmigen Trägers 23 vorzunehmen.

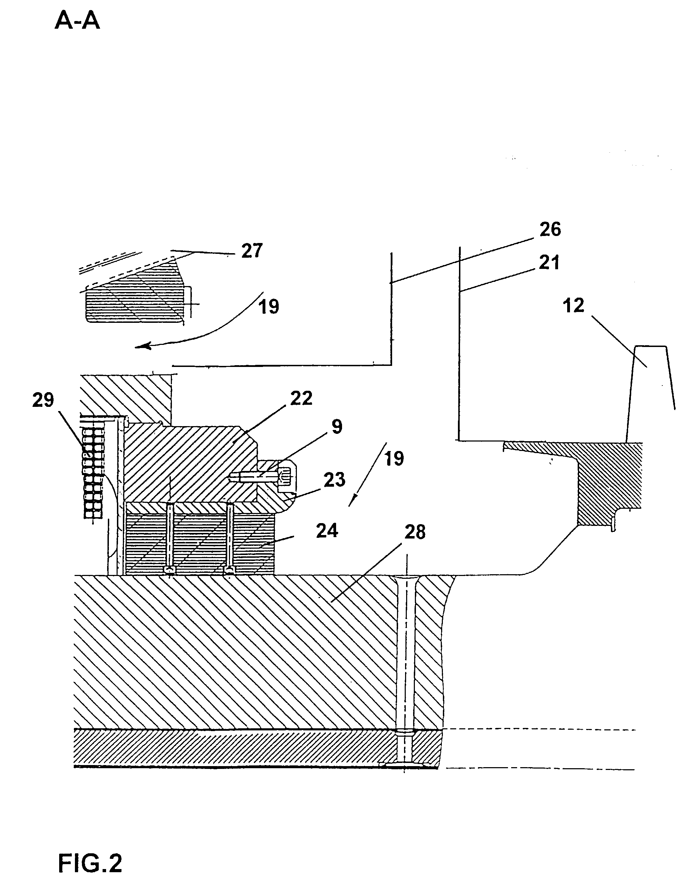

Betrachtet man die teilweise Abwicklung des Innenumfangs des ringförmigen Trägers 23 in Fig. 4, so sind hier in regelmässigen Abständen Füllstücke 24 zwischen benachbarten Laufschaufeln der einzelnen Strömungsgitterstufen vorgesehen, wobei diese Füllstücke 24 entsprechend der Schaufelkontur der Strömungsgitterstufen 30a, 30b ausgeformt sind. Eine Längsschnittdarstellung durch ein Füllstück 24 gemäss der gestuften Schnittlinie A-A in Fig.4 zeigt die Fig. 2.

Der ringförmige Träger 23 liegt in axialer Richtung mit einem Flansch an einer Rotorkappenplatte 22 an und ist mit dieser, wie in Fig. 2 dargestellt, mittels Schrauben 9 verbunden. Um eine einfache Montage und gegebenenfalls Demontage des ringförmigen Trägers 23 zu gewährleisten, ist dieser zweiteilig, also als zwei Halbringe ausgeführt.

Durch die Verwendung der beschriebenen Schaufelgitterstufen wird eine entscheidende Verminderung der Stossverluste bei der Kühlmittelanströmung in Rotoren erzielt, wobei mit höherem Kühlmitteldruck eine optimale Anströmung aller Rotorkühlkanäle erfolgt. Gegenüber dem Stand der Technik wird dabei ein um 40% gesteigerter Kühlmitteldurchsatz erzielt.

Denkbar im Sinn der Erfindung wäre beispielsweise auch eine Schaufelgitteranordnung mit drei Schaufelgitterstufen.

### BEZUGSZEICHENLISTE

- 1: Maschinengehäuse
- 2: Teilblechkörper
- 3: Belüftungsschlitze
- 4: Rotor
- 5, 6: Bocklager
- 7: Fundament
- 8: Zuganker
- 9: Schraube
- 10: Fundamentgrube
- 11: Kühlanordnung
- 12: Hauptventilator
- 13: Ausgleichsraum
- 14, 16: Kaltgaskammer
- 15, 17: Heissgaskammer
- 18: Heissluft vor 11
- 19: Kaltluft nach 11
- 20: Aussenverschalung
- 21: Innenverschalung
- 22: Rotorkappenplatte
- 23: ringförmiger Träger mit Flansch
- 24: Füllstück
- 25: Luftspalt
- 26: Leitbleche
- 27: Wickelkopf
- 28: Rotorwelle
- 29: Rotorwickelkopf
- 30a, b: Strömungsgitter

## Patentansprüche

1. Rotor (4) eines Turbogenerators mit direkter Gaskühlung, der in einem Ringspalt zwischen einem Innenrand einer Rotorkappenplatte (22) und einer Rotorwelle (28) ein Strömungsgitter (30a, 30b) aufweist,
dadurch gekennzeichnet,
dass das Strömungsgitter (30a, 30b) mindestens zweistufig ausgeführt ist, wobei eine erste Stufe des Strömungsgitters (30b) ein Verzögerungsgitter mit überwiegend druckerzeugenden Eigenschaften ist, und
dass eine zweite Stufe des Strömungsgitters (30a) ein Verzögerungsgitter mit überwiegend Umlenkeigenschaften ist.

2. Rotor (4) nach Anspruch 1,
dadurch gekennzeichnet,
dass die erste Stufe des Strömungsgitter (30b) druckerzeugenden Eigenschaften einem Hauptventilator zugewandt ist, und
die zweite Stufe des Strömungsgitter (30a) mit Umlenkeigenschaften einem Rotorwickelkopf (29) zugewandt ist.

3. Rotor nach Anspruch 1 oder 2,
dadurch gekennzeichnet,
dass die erste Stufe und die zweite Stufe des Strömungsgitters (30a, 30b) sich in axialer Richtung des Rotors (4) nicht überlappen.

4. Rotor nach Anspruch 1,
dadurch gekennzeichnet,
dass die eine Kühlgasströmung (19) begrenzenden Wände zwischen dem Innenrand der Rotorkappenplatte (22) und der Rotorwelle (28) eine zum Rotorwickelkopf (27) hin konisch zusammenlaufende Kontur aufweisen.
